(19) Europäisches Patentamt / European Patent Office / Office européen des brevets

(11) **EP 4 105 278 B1**

(12) **EUROPEAN PATENT SPECIFICATION**

(45) Date of publication and mention
of the grant of the patent:
**23.04.2025 Bulletin 2025/17**

(21) Application number: **22176683.5**

(22) Date of filing: **01.06.2022**

(51) International Patent Classification (IPC):
**C08L 7/02** *(2006.01)* **C08L 9/04** *(2006.01)*
**C08L 29/04** *(2006.01)* **C08L 1/08** *(2006.01)*
**C08K 3/04** *(2006.01)* **B29C 41/14** *(2006.01)*
**C08J 5/02** *(2006.01)* **A41D 19/00** *(2006.01)*

(52) Cooperative Patent Classification (CPC):
(C-Sets available)
**C08L 7/02; A41D 19/0065; B29C 41/14; C08J 5/02;
D04B 1/28; G06F 3/0393;** B29K 2105/0064;
B29K 2995/0005; B29L 2031/4864; C08J 2307/02;
C08J 2309/04; C08J 2401/08; C08J 2429/04;
D10B 2401/16                                        (Cont.)

(54) **RUBBER LATEX COMPOUND, METHOD FOR MANUFACTURING GLOVE, AND GLOVE**

KAUTSCHUKLATEXMISCHUNG, VERFAHREN ZUR HERSTELLUNG EINES HANDSCHUHS UND HANDSCHUH

COMPOSÉ DE LATEX EN CAOUTCHOUC, PROCÉDÉ DE FABRICATION DE GANT, ET GANT

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **15.06.2021 JP 2021099314**

(43) Date of publication of application:
**21.12.2022 Bulletin 2022/51**

(73) Proprietor: **Showa Glove Co.
Hyogo 670-0802 (JP)**

(72) Inventor: **KISHIHARA, Hidetoshi
Himeji-shi, 670-0802 (JP)**

(74) Representative: **dompatent von Kreisler Selting
Werner -
Partnerschaft von Patent- und Rechtsanwälten
mbB
Deichmannhaus am Dom
Bahnhofsvorplatz 1
50667 Köln (DE)**

(56) References cited:
CN-B- 108 384 078     JP-A- 2003 321 581
RU-C1- 2 280 050     US-B1- 10 479 874

(52) Cooperative Patent Classification (CPC): (Cont.)

C-Sets
**C08L 7/02, C08L 1/08, C08K 5/42, C08K 3/04,
C08K 3/06, C08K 3/22, C08K 5/39, C08K 5/13;
C08L 7/02, C08L 29/04, C08K 5/42, C08K 3/04,**

**C08K 3/06, C08K 3/22, C08K 5/39, C08K 5/13;
C08L 9/04, C08L 1/08, C08K 5/42, C08K 3/04,
C08K 3/06, C08K 3/22, C08K 5/39, C08K 5/13;
C08L 9/04, C08L 29/04, C08K 5/42, C08K 3/04,
C08K 3/06, C08K 3/22, C08K 5/39, C08K 5/13**

**Description**

BACKGROUND OF THE INVENTION

Field of the Invention

The present invention relates to a rubber latex compound, a method for manufacturing a glove, and a glove obtained by this method.

Description of the Related Art

In recent years, for both household and industrial use, devices operated by touch panels have increased. As such touch panels, touch panels operated in an electrostatically capacitive manner are common. An electrostatic capacitive touch panel is operated by capacitive coupling by means of a charge moving between a human body (e.g., a fingertip) and the touch panel. Accordingly, for example, there are cases in which when a glove is worn, this capacitive coupling weakens, whereby responsiveness of the touch panel may deteriorate.

In order to prevent the deterioration of the responsiveness of the touch panel, it is necessary to impart electrical conductivity to the glove to alter electrostatic capacitance, an electric field, a magnetic field, and/or the like with respect to the touch panel which approaches or comes in contact with the glove, thereby allowing sensing as a site of touching. As a glove imparted with electrical conductivity, a glove thermoformed using a rubber latex compound in which acid-treated carbon black is blended into rubber latex is known (see Japanese Unexamined Patent Application, Publication No. 2003-321581).

A greater amount of addition of the carbon black tends to result in a glove coating film becoming stiffer. When the glove coating film becomes stiff, a workability problem of, e.g., flexibility of the glove deteriorating may result, and consequentially grasping an object becomes more difficult. In the case of this rubber latex compound, using acid-treated carbon black enables inhibiting aggregation and/or gelation of the carbon black in the state of the compound, whereby achieving low resistance is enabled with a relatively small amount of addition.

Prior Art Document

Patent Document

Patent Document 1: Japanese Unexamined Patent Application, Publication No. 2003-321581

SUMMARY OF THE INVENTION

By the aforementioned conventional rubber latex compound, to achieve low resistance to a level in which responsiveness of the touch panel is not deteriorated, it becomes necessary to adopt a blending amount of the carbon black with respect to 100 parts by mass of the rubber latex being, for example, no less than 20 parts by mass. On the other hand, with regard to operation of the touch panel, a glove to be formed is required to have superior flexibility. Accordingly, there is a requirement for a glove in which the blending amount of the carbon black is further decreased.

The present invention was made in view of the aforementioned circumstances, and an object of the invention is to provide: a rubber latex compound which enables manufacturing of a glove which is superior in terms of touch panel responsiveness and has superior flexibility; a method for manufacturing a glove which employs this rubber latex compound; and a glove which is superior in terms of touch panel responsiveness and has superior flexibility.

To obtain superior electrical conductivity with the amount of addition of the carbon black being small, it is necessary to secure a large number of electrically conductive paths in which the carbon black links to itself and extends. With regard to the securing of these electrically conductive paths, the present inventors turned their attention to improving compound stability of the carbon black in the rubber latex, i.e., to inhibiting aggregation and gelation due to the carbon black so as to enhance dispersibility. Generally, electrically conductive carbon black is unstable in rubber latex, exhibiting poor compound stability. Consequently, in a coating film formed using a rubber latex compound containing the rubber latex and the carbon black, aggregation due to the carbon black tends to occur, whereby it is less likely for the carbon black to link to itself and extend. In other words, it is difficult to secure the electrically conductive paths. Thus, to obtain the desired electrical conductivity, it is considered that a large amount of addition of the carbon black is necessitated. With regard to this, the present inventors have determined that by adding an anionic surfactant, a nonionic dispersant, and a water-soluble polymer, each in an appropriate amount, the compound stability of the carbon black significantly improves, enabling improvement of the electrical conductivity of the coating film, whereby the present invention was accomplished.

More specifically, a rubber latex compound according to one aspect of the present invention is a rubber latex compound for a glove containing a rubber latex as a principal component, wherein carbon black, an anionic surfactant, a nonionic dispersant, and a water-soluble polymer are contained in the rubber latex compound; a DBP oil absorption of the carbon black is no less than 250 ml/100 g and no greater than 600 ml/100 g, and a volatile content of the carbon black is no less than 0.3% by mass and less than 1.0% by mass; an amount of addition of the water-soluble polymer with respect to 100 parts by mass of the carbon black is no less than 8 parts by mass and no greater than 50 parts by mass; and a total amount of addition of the nonionic dispersant and the water-soluble polymer with respect to 100 parts by mass of the carbon black is no less than 38 parts by mass and no greater than 200 parts by mass.

With regard to the rubber latex compound, since the carbon black is contained with the DBP oil absorption and the volatile content falling within the above ranges, the compound stability is enhanced, and the electrical conductivity of the coating film to be formed is more easily secured. Furthermore, to the rubber latex compound are added the nonionic dispersant and the water-soluble polymer fulfilling the above amounts of addition, as well as the anionic surfactant. Due to this blending, compound stability of the carbon black in the rubber latex compound can be enhanced. Thus, in the coating film formed using the rubber latex compound, electrically conductive paths in which the carbon black links to itself and extends can be more easily secured, showing superior electrical conductivity with a small amount of addition. Accordingly, employing the rubber latex compound enables manufacturing of a glove which is superior in touch panel responsiveness and has superior flexibility.

The amount of addition of the carbon black with respect to 100 parts by mass of a solid content of the rubber latex is preferably no less than 0.6 parts by mass and no greater than 9.5 parts by mass. When the amount of addition of the carbon black thus falls within the above range, the electrical conductivity can be enhanced while maintaining the superior flexibility of the coating film to be formed.

The amount of addition of the anionic surfactant with respect to 100 parts by mass of solid content of the rubber latex is preferably no less than 0.05 parts by mass and no greater than 1.0 parts by mass. When the amount of addition of the anionic surfactant with respect to 100 parts by mass of the solid content of the rubber latex thus falls within the above range, the electrical conductivity can be enhanced while securing stability of the rubber latex compound over time and ease of manufacturing of the glove.

A mass ratio of the nonionic dispersant to the anionic surfactant is preferably no less than 0.2 and no greater than 285. When the mass ratio of the nonionic dispersant to the anionic surfactant thus falls within the above range, the electrical conductivity of the glove to be manufactured can be enhanced while securing stability of the rubber latex compound over time, the dispersibility of the carbon black, and ease of manufacturing of the glove.

A total mass ratio of the nonionic dispersant and the water-soluble polymer to the anionic surfactant is preferably no less than 0.5 and no greater than 300. When the water-soluble polymer is contained such that the total mass ratio of the nonionic dispersant and the water-soluble polymer to the anionic surfactant thus falls within the above range, the compound stability of the carbon black and the electrical conductivity can be further enhanced.

A method for manufacturing a glove according to another aspect of the present invention the method includes: first dipping of dipping a hand mold in a coagulation agent solution; second dipping of dipping the hand mold in a rubber latex compound after the first dipping; and drying the hand mold after the second dipping, wherein the rubber latex compound is the rubber latex compound of the one aspect of the present invention.

The method for manufacturing a glove employs the rubber latex compound of the one aspect of the present invention, thereby enabling manufacturing of a glove wherein the electrically conductive paths in which the carbon black links to itself and extends can be more easily secured, resulting in superior touch panel responsiveness, the glove also having superior flexibility.

As referred to herein, the term "principal component" means the component having the highest content, and is, for example, a component having a content of no less than 50% by mass. The term "DBP oil absorption" is an amount of DBP (dibutyl phthalate) absorbed by 100 g of carbon black, and is measured using a sample amount of 9 g in accordance with ASTM D 2414.

Furthermore, the "volatile content of the carbon black" can be measured by the following procedure. A magnetic crucible (diameter: 15 mm; height: 30 mm; capacity: 10 mL) and a drop lid are baked for 30 min at a temperature of $950 \pm 20$ °C, followed by cooling to room temperature (25 °C) in a desiccator, and then a mass (MA) of the magnetic crucible and the drop lid are weighed at a precision in a unit of 0.1 mg. Next, 2 g of the carbon black is packed into the magnetic crucible so as not to exceed 2 mm from the bottom of the lid, the drop lid is closed, and then a mass (MB) thereof is weighed at a precision in a unit of 0.1 mg. Thereafter, heating is conducted in an electric furnace for 7 min at a temperature of $950 \pm 20$ °C, followed by cooling to room temperature (25 °C) in a desiccator, and then once again, the mass (MC) is weighed at a precision in a unit of 0.1 mg, and the volatile content is calculated by the following formula 1.

$$\text{volatile content (\% by mass)} = (MB - MC) / (MB - MA) \times 100 \dots (1)$$

The "surface resistance" and the "volume resistance" can be measured by the following procedures. In a case in which the electrically conductive portion is present on a palm portion in addition to finger portion(s), and the electrical conductivity is equivalent in both the finger portion(s) and the palm portion, the surface resistance and the volume resistance are each measured in accordance with EN16350 and EN61340-2-3: 2016 8, being EN standards. It is to be noted that a measurement sample is cut and removed from a site (for example, the finger portion(s); hereinafter, may be also referred to as "target site for measurement") for which electrical conductivity (the surface resistance) or the explosion-resistant property (the volume resistance) are required. However, in a case in which the measurement sample cannot be taken from the target site for measurement, e.g., a case which the electrically conductive portion is on only the finger portion(s), a case in which the electrical conductivity of the finger portion(s) and that of the palm portion are different, and/or the like, the surface resistance is measured in accordance with EN16350 and EN61340-2-3: 2016 10, and the volume resistance is measured in accordance with ANSI/ESD SP15.1-2005.

Effects of the Invention

As described above, the rubber latex compound of the one aspect of the present invention enables manufacturing of a glove which is superior in terms of touch panel responsiveness and has superior flexibility. Furthermore, the glove manufactured using this rubber latex compound and the thus obtained glove are superior in terms of touch panel responsiveness, and have superior flexibility.

BRIEF DESCRIPTION OF THE DRAWINGS

FIG. 1 is a flow chart illustrating a method for manufacturing a glove according to one embodiment of the present invention.

FIG. 2 is a schematic perspective view of the glove according to one embodiment of the present invention when viewed from a palm side thereof.

FIG. 3 is a schematic perspective view of the glove shown in FIG. 2 when viewed from a hand dorsal side thereof.

FIG. 4 is a schematic front view of a glove different from that shown in FIG. 2 when viewed from a palm side thereof.

DESCRIPTION OF THE PREFERRED EMBODIMENTS

A rubber latex compound, a method for manufacturing a glove, and a glove according to one embodiment of the present invention are described in detail hereafter.

Rubber Latex Compound

The rubber latex compound according to the one aspect of the present invention is a rubber latex compound for a glove containing rubber latex as a principal component. Carbon black, an anionic surfactant, a nonionic dispersant, and a water-soluble polymer are contained in the rubber latex compound.

Rubber Latex

The rubber latex is a homopolymer or copolymer of an acrylonitrile butadiene rubber (NBR), an acrylic rubber, a urethane rubber, a natural rubber (NR), an isoprene rubber, a chloroprene rubber, or the like; or a carboxy-modified polymer thereof, being a single polymer or a blend of a plurality of these polymers.

With regard to the rubber latex, a rubber latex having a higher gel content can exist more stably with the carbon black in the compound. The gel content decreases when a polymer chain of the rubber latex has few branches, and the gel content increases when the polymer chain has many branches. In the case of an NBR, the gel content of the rubber latex can be evaluated as an MEK-insoluble matter percentage. The lower limit of the MEK-insoluble matter percentage of the rubber latex is preferably 10% by mass, more preferably 20% by mass, and still more preferably 30% by mass. On the other hand, the upper limit of the MEK-insoluble matter percentage of the rubber latex is preferably 80% by mass, more preferably 75% by mass, and still more preferably 73% by mass. When the MEK-insoluble matter percentage of the rubber latex is less than the lower limit, the stability of the carbon black in the rubber latex compound may deteriorate. Conversely, when the MEK-insoluble content percentage of the rubber latex is greater than the upper limit, film formability of the coating film resulting from the rubber latex compound may deteriorate. Similarly, in the case of an NR, the gel content can be evaluated as a toluene-insoluble matter percentage, and the lower limit of the toluene-insoluble matter percentage is preferably 50%. The upper limit of the toluene-insoluble matter percentage is not particularly limited, and is preferably 90%, and more preferably 85%.

Here, the MEK-insoluble matter percentage can be determined by the following procedure. First, the rubber latex is diluted with ion exchanged water such that a total solid content is 30% by mass. 5 g of this diluted latex is weighed in a glass petri dish having an inner diameter of 10 cm, and dried for 15 hrs in a 30 °C oven to remove moisture , thereby giving a film having an average thickness of about 0.05 mm. The film is cut into small test pieces of about 5 mm square, the test pieces are collected to have a mass of about 0.2 g in total, and the mass (this mass is defined as "W (g)") is measured to 4 significant digits. The test pieces are placed in a #80-mesh metal basket having a mass measured beforehand (bottom face: about 2 cm square, weight: about 9 g). Subsequently, the basket containing the test pieces is dipped in 100 ml of methyl ethyl ketone (MEK) and left to stand for 24 hrs at a temperature no lower than 23 °C and no higher than 25 °C. After being left to stand, the basket is thereafter withdrawn from MEK and gently shaken for 30 sec to drain excessive MEK. Furthermore, the basket containing the test pieces is subjected to drying at 30 °C for 3 hrs and then at 105 °C for 30 min, and thereafter a total mass of the basket containing the test pieces is measured. A mass (this mass is defined as "B (g)") of the test pieces after the drying is obtained by calculating a difference between the total mass of the basket containing the test pieces and the mass of the basket measured beforehand. On the basis of the masses thus calculated, the individual insoluble matter percentages of the test pieces are obtained according to the following formula 2. This is performed for four test pieces, and the arithmetical mean thereof is defined as the insoluble matter percentage. It is to be noted that the toluene-insoluble matter percentage can be similarly measured by changing the above-mentioned MEK to toluene.

$$\text{individual insoluble matter percentage (\% by mass)} = B/W \times 100 \ ... \quad (2)$$

Carbon Black

The lower limit of the DBP absorption of the carbon black to be used is 250 ml/100 g, and more preferably 300 ml/100 g. On the other hand, the upper limit of the DBP absorption of the carbon black is 600 ml/100 g, and more preferably 500 ml/100 g.

Since in the rubber latex compound, the DBP absorption of the carbon black is equal to or greater than the lower limit, an aggregation structure of a primary aggregate of the carbon black facilitates securing electrically conductive paths. Thus, the electrical conductivity of the coating film formed from the rubber latex compound (hereinafter, may be referred to as simply "electrical conductivity") is more easily secured. When the DBP absorption of the carbon black is less than the lower limit, it will become necessary to add a large amount of carbon black to obtain the electrical conductivity, whereby the flexibility of the coating film formed from the rubber latex compound (hereinafter, may be referred to as simply "flexibility") may be insufficient. Conversely, when the DBP absorption of the carbon black is greater than the upper limit, the dispersibility of the carbon black may decrease, whereby the compound stability may deteriorate. It is to be noted that for example, Ketjen Black (registered trademark) may be exemplified as the carbon black in which the DBP absorption falls within the above range.

The lower limit of a BET specific surface area of the carbon black is preferably 250 m$^2$/g, and more preferably 500 m$^2$/g. On the other hand, the upper limit of the BET specific surface area of the carbon black is preferably 1,500 m$^2$/g, and more preferably 1,200 m$^2$/g. When the BET specific surface area is equal to or greater than the lower limit, fine pores in the carbon black increase, whereby conductive holes increase. Furthermore, due to polymer molecules in the rubber latex entering into the fine pores, a distance between particles of the carbon black decreases, enabling the electrical conductivity to be further easily expressed. Conversely, when the BET specific surface area of the carbon black is greater than the upper limit, the dispersibility of the carbon black may decrease, whereby the compound stability may deteriorate. It is to be noted that the "BET specific surface area" as referred to herein is measured in accordance with ASTM D 3037.

The lower limit of the volatile content of the carbon black is 0.3% by mass, and more preferably 0.4% by mass. On the other hand, the upper limit of the volatile content of the carbon black is less than 1.0% by mass, and more preferably less than 0.9% by mass. The volatile content is related to a quantity of functional groups such as carboxyl groups contained in the carbon black. As the quantity of the functional groups decreases, the electrical conductivity increases, but crystallinity of the carbon black may increase, whereby the compound stability may deteriorate. In other words, when the volatile content is less than the lower limit, the compound stability of the carbon black may deteriorate. Conversely, when the volatile content is greater than the upper limit, the electrical conductivity may deteriorate.

Furthermore, an ash content of the carbon black is preferably no greater than 0.9% by mass. The ash content, i.e., impurities, being lower results in the electrical conductivity increasing. The lower limit value of the ash content of the carbon black is not particularly limited, and may be 0% by mass, and is typically about 0.01% by mass. It is to be noted that the "ash content of the carbon black" as referred to herein is a value measured in accordance with ASTM D 1506.

A pH of the carbon black is preferably no less than 6 and no greater than 10. When the pH of the carbon black falls within the above range, the electrical conductivity can be increased. It is to be noted that the pH of the carbon black can be measured by the following procedure. 1 g $\pm$ 0.01 g of carbon black is weighed at a precision in a unit of 0.01 g and extracted in a 20 mL beaker, and then 1 mL of ethyl alcohol and 10 mL of distilled water, brought to a boil in advance, are added thereto to obtain a dispersion liquid of the carbon black. Thereafter, the beaker is covered with a watch glass, and the dispersion liquid is allowed to cool at a constant temperature of 25 °C for 60 min. The dispersion liquid being at 25 °C is confirmed, and an indicated value is taken 1 minute after the start of measurement using a pH meter calibrated with buffer solutions having the pH of 4, 7, and 9, and this indicated value is defined as the pH value.

The lower limit of the amount of addition of the carbon black with respect to 100 parts by mass of the solid content of the rubber latex is preferably 0.6 parts by mass, more preferably 2 parts by mass, and still more preferably 3 parts by mass. On the other hand, the upper limit of the amount of addition of the carbon black is preferably 9.5 parts by mass, more preferably 8 parts by mass, and still more preferably 7 parts by mass. When the amount of addition of the carbon black is less than the lower limit, the electrical conductivity may be insufficient. Conversely, when the amount of addition of the carbon black is greater than the upper limit, the flexibility may be lacking, whereby, for example, operational feeling of the touch panel may deteriorate.

The carbon black is preferably prepared as an aqueous dispersion. In other words, the carbon black is preferably dispersed using the nonionic dispersant, described in detail later, and thereafter mixed with the rubber latex. When the carbon black is thus dispersed using the nonionic dispersant and thereafter mixed with the rubber latex, the dispersion stability of the carbon black in the rubber latex compound can be improved. The dispersion stability of the carbon black contributes greatly to the electrical conductivity, and when the dispersion stability is poor, aggregation resulting from the carbon black becomes likely to occur. This leads to the deterioration of the electrical conductivity of the glove obtained from the rubber latex compound, and calls for an increase in the amount of addition of the carbon black, thereby stiffening the glove. Stiffening of the glove means that it is more difficult for the glove to align with an object, i.e., a touch panel or the like, which means that due to the stiffness, a contact area for making the touch panel react becomes smaller, consequently leading to deterioration in the responsiveness of the touch panel.

In the aqueous dispersion, the lower limit of an amount of addition of the nonionic compound with respect to 100 parts by mass of the carbon black is preferably 30 parts by mass, more preferably 40 parts by mass, and still more preferably 50 parts by mass. On the other hand, the upper limit of the amount of addition of the nonionic dispersant is preferably 150 parts by mass, more preferably 140 parts by mass, and still more preferably 130 parts by mass. When the amount of addition of the nonionic dispersant is less than the lower limit, stably dispersing the carbon black may not be enabled, and aggregation resulting from the carbon black may occur, whereby the electrical conductivity may deteriorate. Conversely, when the amount of addition of the nonionic dispersant is greater than the upper limit, molding into a glove may be difficult.

Anionic Surfactant

The anionic surfactant enhances the stability of the rubber latex, thereby enabling inhibiting the occurrence of aggregation resulting from the carbon black. In a case in which the anionic surfactant is not contained, the stability of the rubber latex may be insufficient, whereby there are tendencies for: aggregation of the carbon black to occur when the carbon black is contained; the viscosity to increase, precluding usage as a rubber latex compound; and film formability to deteriorate in making the coating film by a salt coagulation method.

As the anionic surfactant, a well-known anionic surfactant may be used, and examples thereof include fatty acid salts, alkylsulfuric acid ester salts, alkylbenzenesulfonic acid salts, alkylnaphthalenesulfonic acid salts, alkylsulfosuccinic acid salts, polyoxyethylalkyl sulfuric acid ester salts, naphthalenesulfonic acid formalin condensates, and the like.

The lower limit of an amount of addition of the anionic surfactant with respect to 100 parts by mass of the solid content of the rubber latex is preferably 0.05 parts by mass, more preferably 0.1 parts by mass, and still more preferably 0.2 parts by mass. On the other hand, the upper limit of the amount of addition of the anionic surfactant is preferably 1.0 parts by mass, more preferably 0.8 parts by mass, and still more preferably 0.7 parts by mass. When the amount of addition of the anionic surfactant is less than the lower limit, aggregation resulting from the carbon black, an accompanying deterioration in the electrical conductivity, deterioration in the stability of the rubber latex compound over time, and/or the like may occur. Conversely, when the amount of addition of the anionic surfactant is greater than the upper limit, the stability of the rubber latex may increase excessively, whereby an aggregating property of the rubber latex may rather deteriorate and manufacturing of the glove may become difficult.

Nonionic Dispersant

The nonionic dispersant is contained in the rubber latex compound. A dispersant which is nonionic is superior in terms of stability with respect to the carbon black.

As the nonionic dispersant, a well-known nonionic dispersant may be used, and examples thereof include: modified acrylic polymers, polyalkylene glycol, fatty acid esters, alkyl ethers, and the like and derivatives thereof; copolymers of styrenes such as styrene and $\alpha$-methylstyrene, and alkyloxypolyalkylene glycol (meth)acrylic acid esters;

copolymers of styrenes and maleic anhydride; and the like. Of these, the copolymers of the styrenes such as styrene and α-methylstyrene, and the alkyloxypolyalkylene glycol (meth)acrylic acid esters, e.g., a styrene-methoxypolyethylene glycol methacrylate copolymer; and the copolymers of the styrenes and maleic anhydride, e.g., a styrene-maleic anhydride copolymer, are preferred.

The present inventors have become aware that the stability of the rubber latex compound containing the carbon black tends to be dependent on a ratio of the anionic surfactant, for stabilizing the rubber latex, and the nonionic dispersant, for stabilizing the carbon black. More specifically, the lower limit of a mass ratio of the nonionic dispersant to the anionic surfactant is preferably 0.2, more preferably 1.0, and still more preferably 2.5. On the other hand, the upper limit of the mass ratio of the nonionic dispersant is preferably 285, more preferably 110, and still more preferably 45. When the mass ratio of the nonionic dispersant is equal to or greater than the lower limit, facilitating securing the stability of the rubber latex compound over time, the dispersibility of the carbon black, and the ease of manufacturing of the glove is enabled. Furthermore, when the mass ratio of the nonionic dispersant is less than the lower limit, aggregation resulting from the carbon black in the rubber latex compound may occur, whereby the electrical conductivity may deteriorate. Conversely, when the mass ratio of the nonionic dispersant is greater than the upper limit, the carbon black linking to itself during film formation may be inhibited, whereby sufficient electrically conductive paths may not be formed.

The lower limit of the amount of addition of the nonionic dispersant with respect to 100 parts by mass of the solid content of the rubber latex is preferably 0.6 parts by mass, and more preferably 1 part by mass. On the other hand, the upper limit of the amount of addition of the nonionic dispersant is preferably 15 parts by mass, and more preferably 10 parts by mass. When the amount of addition of the nonionic dispersant is less than the lower limit, aggregation resulting from the carbon black in the rubber latex compound may occur, whereby the electrical conductivity may deteriorate. Conversely, when the amount of addition of the nonionic dispersant is greater than the upper limit, the carbon black linking to itself during film formation may be inhibited, whereby sufficient electrically conductive paths may not be formed.

Water-Soluble Polymer

The stability of the carbon black in the rubber latex compound can be further enhanced by adding the water-soluble polymer to the rubber latex compound. Particularly in the case of using carbon black having a high DBP absorption as the carbon black, connections of the carbon black tend to become long, whereby there is a tendency for the viscosity of the rubber latex compound to become high. In such cases, the water-soluble polymer exhibits an effect of stabilizing the carbon black.

It is to be noted that in a case in which the carbon black is provided as the aqueous dispersion, it was discussed that the carbon black is preferably dispersed using the nonionic dispersant. On the other hand, this water-soluble polymer is preferably mixed with the rubber latex before the aqueous dispersion is mixed into the rubber latex. In other words, due to the nonionic dispersant and the water-soluble polymer being added to the rubber latex, the amount of addition of the nonionic dispersant, for enhancing the stability of the carbon black in the aqueous dispersion, and the total amount of addition of the nonionic dispersant and the water-soluble polymer, for enhancing the stability of the carbon black in the rubber latex compound, can be independently controlled. Thus, the stability of the carbon black in the rubber latex compound can be more easily enhanced.

Examples of the water-soluble polymer include: cellulose derivatives such as carboxymethyl cellulose (CMC), methyl cellulose, hydroxypropyl cellulose, and hydroxyethylmethyl cellulose; polyvinyl alcohol, polyvinyl pyrrolidone, polyacrylic acid, polymethacrylic acid, polyacrylamide, poly-N-isopropylacrylamide, poly-N,N-dimethylacrylamide, polyethyleneimine, polyoxyethylene, poly(2-methoxyethoxyethylene), polyvinyl sulfonic acid, polyvinylidene fluoride, amylose, gum arabic, casein, alginic acid, and salts thereof; and the like. Of these, carboxymethyl cellulose and polyvinyl alcohol, which are easily removed by washing after film formation using the rubber latex compound, are preferred. It is to be noted that in the case of the rubber latex containing the NBR, in light of film-forming processability, the polyvinyl alcohol is particularly preferred.

In the case of using the polyvinyl alcohol as the water-soluble polymer, the polyvinyl alcohol may be used after being subjected to partial saponification (degree of saponification of no greater than 88 mol%), intermediate saponification (degree of saponification of greater than 88 mol% and no greater than 98 mol%), or complete saponification (degree of saponification of greater than 98 mol%), and in light of a relationship between the solubility of the polyvinyl alcohol and the viscosity of the rubber latex compound, the polyvinyl alcohol after being subjected to the intermediate saponification is preferred.

The lower limit of a mass ratio of the water-soluble polymer to the anionic surfactant is preferably 0.06, more preferably 0.25, and still more preferably 0.5. On the other hand, the upper limit of the mass ratio of the water-soluble polymer is preferably 60, more preferably 15, and still more preferably 10. When the mass ratio of the water-soluble polymer is less than the lower limit, the effect resulting from adding the water-soluble polymer may not be sufficiently obtained. Conversely, when the mass ratio of the water-soluble polymer is greater than the upper limit, the stability of the rubber latex compound may excessively increase, whereby flowing of the compound may occur during molding of the glove, and moldability may be deteriorated.

The water-soluble polymer prevents the rubber latex compound from becoming unstable due to the carbon black. In other words, it is considered that the stability of the carbon black in the rubber latex compound is decided by the total amount of addition of the nonionic dispersant and the water-soluble polymer. The lower limit of a total mass ratio of the nonionic dispersant and the water-soluble polymer to the anionic surfactant is preferably 0.5, more preferably 2, and still more preferably 4. On the other hand, the upper limit of the total mass ratio is preferably 300, more preferably 120, and still more preferably 50. When the total mass ratio is less than the lower limit, the stability of the carbon black may deteriorate and aggregates may result, whereby the electrical conductivity may deteriorate. Conversely, when the total mass ratio is greater than the upper limit, the stability of the carbon black may excessively increase, whereby flowing of the compound may occur during molding of the glove, and the moldability may be deteriorated.

Furthermore, the lower limit of the amount of addition of the water-soluble polymer with respect to 100 parts by mass of the carbon black is 8 parts by mass, and more preferably 9 parts by mass. On the other hand, the upper limit of the amount of addition of the water-soluble polymer is 50 parts by mass, and more preferably 18 parts by mass. When the amount of addition of the water-soluble polymer is less than the lower limit, aggregation resulting from the carbon black in the rubber latex compound may be more likely to occur. Conversely, when the amount of addition of the water-soluble polymer is greater than the upper limit, flowing of the compound may occur during molding of the glove, and the moldability may be deteriorated.

The lower limit of the amount of addition of the water-soluble polymer with respect to 100 parts by mass of the solid content of the rubber latex is preferably 0.06 parts by mass, more preferably 0.2 parts by mass, and still more preferably 0.3 parts by mass. On the other hand, the upper limit of the amount of addition of the water-soluble polymer is preferably 3 parts by mass, more preferably 1.5 parts by mass, and still more preferably 1 part by mass. When the amount of addition of the water-soluble polymer is less than the lower limit, aggregation resulting from the carbon black in the rubber latex compound may be more likely to occur. Conversely, when the amount of addition of the water-soluble polymer is greater than the upper limit, the stability of the carbon black may excessively increase, whereby flowing of the compound may occur during molding of the glove, and the moldability may be deteriorated.

The lower limit of a total amount of addition of the nonionic dispersant and the water-soluble polymer with respect to 100 parts by mass of the carbon black is 38 parts by mass, and more preferably 50 parts by mass. On the other hand, the upper limit of the total amount of addition is 200 parts by mass, and more preferably 150 parts by mass. When the total amount of addition is less than the lower limit, aggregation resulting from the carbon black in the rubber latex compound may occur, whereby the necessary electrical conductivity may not be obtained. Furthermore, it may become necessary to secure electrical conductivity by excessive addition of the carbon black, whereby the glove may become stiff. Conversely, when the total amount of addition is greater than the upper limit, the stability of the rubber latex compound may excessively increase, whereby flowing of the compound may occur during molding of the glove and the moldability may be deteriorated, and/or formation of the electrically conductive paths of the carbon black may be inhibited.

The mass ratio of the anionic surfactant, the nonionic dispersant, and the water-soluble polymer in the rubber latex compound is preferably 1 : 0.2 to 285 : 0.06 to 60, more preferably 1 : 1 to 112 : 0.25 to 15, and still more preferably 1 : 2.5 to 45 : 0.5 to 10. Furthermore, the mass ratio of the water-soluble polymer to the nonionic dispersant is preferably no less than 0.1 and no greater than 10. When the mass ratio of the anionic surfactant, the nonionic dispersant, and the water-soluble polymer fall within the above ranges, the stability of the carbon black in the rubber latex compound is enhanced, and molding of a glove being superior in electrical conductivity is enabled without greatly increasing the amount of addition of the carbon black. In this way, a glove being superior in flexibility and responsiveness can be provided.

Other Additives

Additives such as a vulcanizing agent, a vulcanization accelerating agent, a metal oxide, a metal salt, a metal oxide salt, a pigment, an anti-aging agent, a thickening agent, an alkaline stabilizer, a heat-sensitive agent, a heat-sensitive gelling point lowering agent, and a film-forming aid may be added to the rubber latex compound. It is to be noted that in a case of using a foaming apparatus to foam the compound for use, a known whipping agent and/or foam stabilizer may also be added.

In the case in which carboxymethyl cellulose or a polyvinyl alcohol is added as the water-soluble polymer, due to a tendency for salt coagulation processability to deteriorate, zinc oxide, being a type of the metal oxide, is preferably added. The lower limit of an amount of addition of the zinc oxide with respect to 100 parts by mass of the solid content of the rubber latex is preferably 1.0 parts by mass, and more preferably 1.5 parts by mass. On the other hand, the upper limit of the amount of addition of the zinc oxide is preferably 5 parts by mass, and more preferably 3.5 parts by mass. When the zinc oxide is added in an amount of addition falling within the above range, deterioration of the coagulation processability can be inhibited. Furthermore, a compound system is preferably adopted in which the viscosity increases due to heating upon combined use with a heat-sensitive agent.

Furthermore, to enhance mechanical stability of the rubber latex compound, the pH is preferably adjusted to be no less than 9.0 and no greater than 11.2 by adding an alkaline stabilizer. Examples of the alkaline stabilizer include potassium hydroxide, ammonia, and the like.

Method for Producing Rubber Latex Compound

The rubber latex compound can be produced by a production method including a step of adding the carbon black, the anionic surfactant, the nonionic dispersant, and the water-soluble polymer to the rubber latex.

The rubber latex is preferably prepared to have a low viscosity in advance by dilution. By thus making the viscosity low, the carbon black can be made to disperse more easily.

The upper limit of the viscosity of the rubber latex after the adjustment and before adding the carbon black, the anionic surfactant, the nonionic dispersant, and the water-soluble polymer is preferably 1,000 mPa·s, and more preferably 500 mPa·s, as measured using a B-type viscometer. On the other hand, depending on a dilution amount, a ratio of the solid content decreases and the thickness of the coating film during molding decreases, but there is no particular limitation as long as there is no effect on the processability. The lower limit of the viscosity of the rubber latex after the adjusting may be, for example, 10 mPa·s.

As described above, the carbon black is preferably prepared as an aqueous dispersion which was dispersed using the nonionic dispersant. Furthermore, addition into the rubber latex is preferably performed in the order of the water-soluble polymer, and then the aqueous dispersion containing the carbon black and the nonionic dispersant. The addition order of the anionic surfactant is not particularly limited, and the anionic surfactant is preferably added before the water-soluble polymer.

In the case of adding the other additive(s), the other additive(s) is/are preferably added after the addition of the anionic surfactant. The water-soluble polymer and the other additive(s) may be added in any order.

Advantages

Since the rubber latex compound contains the carbon black in which the DBP oil absorption is no less than 250 ml/100 g and no greater than 600 ml/100 g, and the volatile content is no less than 0.3% by mass and less than 1.0% by mass, the compound stability is enhanced, and the electrical conductivity of the coating film to be formed is more easily secured. Furthermore, with regard to the rubber latex compound, the amount of addition of the water-soluble polymer with respect to 100 parts by mass of the carbon black is no less than 8 parts by mass and no greater than 50 parts by mass, the total amount of addition of the nonionic dispersant and the water-soluble polymer with respect to 100 parts by mass of the carbon black is no less than 38 parts by mass and no greater than 200 parts by mass, and the anionic surfactant is further contained. Due to this blending, the compound stability of the carbon black in the rubber latex compound can be enhanced. Thus, in the case of the coating film formed using the rubber latex compound, the electrically conductive paths in which the carbon black links to itself and extends can be easily secured, indicating superior electrical conductivity with a small amount of addition. Accordingly, using the rubber latex compound enables manufacturing of a glove which is superior in terms of touch panel responsiveness and has superior flexibility.

Method for Manufacturing Glove

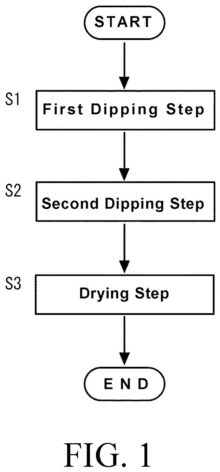

As shown in FIG. 1, the method for manufacturing a glove according to the another aspect of the present invention includes: a first dipping step S1 of dipping a hand mold in a coagulation agent solution; a second dipping step S2 of dipping the hand mold in a rubber latex compound after the first dipping step S1; and a drying step S3 of drying the hand mold after the second dipping step S2. With regard to the method for manufacturing a glove, the rubber latex compound is the rubber latex compound of the one aspect of the present invention.

First Embodiment

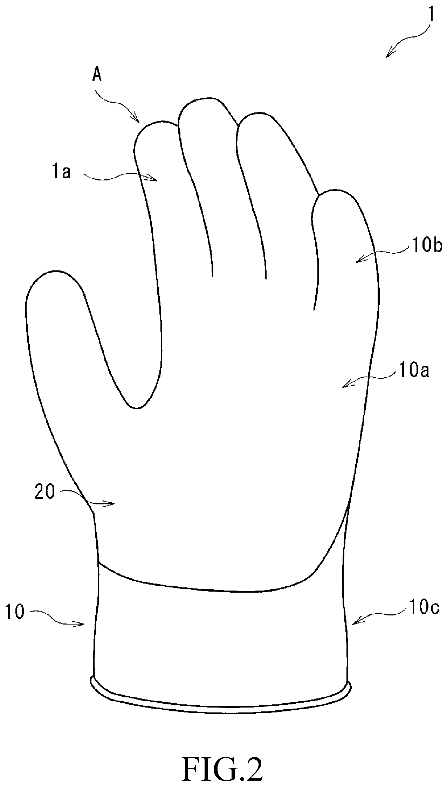

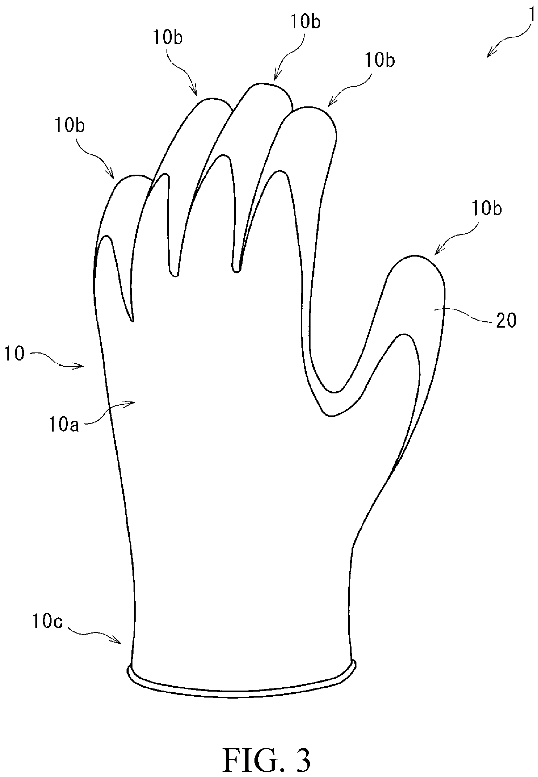

The method for manufacturing a glove, as shown in FIGs. 2 and 3, enables manufacturing a glove 1, which itself is an embodiment of the present invention.

Glove

The glove 1 includes an electrically conductive portion 1a which is exposed on at least an outer face of a palm side of an index finger region A. Specifically, the glove 1 includes: a knitted glove main body 10 made of fibers; and a coating film layer 20 constituting the electrically conductive portion 1a.

Knitted Glove Main Body

The knitted glove main body 10 includes: a main body portion 10a formed into a bag shape so as to cover a wearer's palm and dorsal hand; bottomed cylindrical first finger (thumb) to fifth finger (little finger) portions 10b extending from the main body portion 10a so as to cover the wearer's first finger to fifth finger, respectively; and a cylindrical cuff portion 10c extending in a direction opposite to the first to fifth finger portions 10b.

Examples of a constituent yarn of the knitted glove main body 10 include a cotton yarn, a polyester yarn, a nylon yarn, a polyethylene yarn, a polypropylene yarn, an acrylic yarn, a para-aramid yarn, a meta-aramid yarn, a polyparaphenylene benzoxazole (PBO) yarn, an ultra-high molecular weight polyethylene yarn, a drawn polyethylene yarn, a glass fiber yarn, a metal fiber yarn, a composite yarn thereof, and the like. Furthermore, an elastic yarn using a natural rubber, a polyurethane, or the like as a material may also be used in combination to provide stretchability.

As the constituent yarn of the knitted glove main body 10, a spun yarn, a filament yarn, a composite yarn, or the like, or a combination thereof may be used. In the case of using a spun yarn as the constituent yarn, a yarn which has a thickness corresponding to a cotton count of no less than 3.3 and no greater than 100 in a state of combining a single yarn, a two-fold yarn, or the like may be used. In a case in which a filament yarn is used as the constituent yarn, a yarn which has a thickness corresponding to no less than 50 dtex and no greater than 1,500 dtex in a state of a single yarn, a two-fold yarn, or a combination thereof may be used. In a state of using both a spun yarn and a filament yarn, or a composite yarn thereof, a yarn which has a thickness corresponding to no less than 50 dtex and no greater than 1,500 dtex in a state of all yarns being combined may be used.

The knitted glove main body 10 preferably contains electrically conductive fibers. When the knitted glove main body 10 containing the electrically conductive fibers and the electrically conductive portion 1a are combined, electrostatic discharge is inhibited, thereby enabling enhancing an explosion-resistant property of preventing fires and/or explosions due to combustible gas, vapor, dust, and/or the like.

The electrically conductive fibers may be exemplified by carbon composite organic fibers, metal oxide composite organic fibers, metal compound composite organic fibers, metal-plated organic fibers, and the like, and examples of the electrically conductive fibers which may be used include Clacarbo (registered trademark), produced by Kuraray Co., Ltd., Vectron (registered trademark), produced by Seiren Co., Ltd., Thunderon (registered trademark), produced by Nihon Sanmo Dyeing Co., Ltd., AGposs (registered trademark), produced by Mitsufuji Corporation, and the like.

Coating Film Layer

The coating film layer 20, or in other words the electrically conductive portion 1a, is overlaid on an outer face side of the knitted glove main body 10. In the case of the glove 1 shown in FIGs. 2 and 3, the electrically conductive portion 1a is formed on an entire surface of the knitted glove main body 10 except for a part of the cuff portion 10c on a palm side thereof; however, it is only required that the electrically conductive portion 1a is formed on at least an outer face of the palm side of the index finger region A.

The coating film layer 20 is preferably a layer which is formed on a surface of the knitted glove main body 10 using the rubber latex compound of the one aspect of the present invention and hardened, and which has a foamed structure. When the foamed structure is thus adopted, the coating film 20 becomes more flexible and more easily alignable with the touch panel, whereby the responsiveness of the touch panel is enhanced.

In the case in which the coating film layer 20 has the foamed structure, a volume percentage of air in the coating film layer 20 is preferably no less than 10% and no greater than 60%. When the volume percentage of air is no less than the lower limit, the flexibility can be increased. On the other hand, when the volume percentage of air is no greater than the upper limit, strength of the coating film layer 20 can be maintained. It is to be noted that the "volume percentage of air" as referred to herein can be determined by cutting out a test piece from a central palm portion and observing a cross section of the test piece with a microscope at a magnification of no less than 100 times and no greater than 200 times, and calculating from a percentage of void portions contained in a coating film part.

The electrically conductive portion 1a contains rubber as a principal component, and carbon black.

As the principal component of the rubber, components similar to the rubber components of the rubber latex contained in the rubber latex compound of the one aspect of the present invention, described above, can be exemplified.

As the carbon black, carbon black similar to that contained in the rubber latex compound of the one aspect of the present invention, described above, can be exemplified.

The lower limit of an amount of addition of the carbon black in the electrically conductive portion 1a with respect to 100 parts by mass of the rubber is 0.6 parts by mass, more preferably 2 parts by mass, and still more preferably 3 parts by mass. On the other hand, the upper limit of the amount of addition of the carbon black is 9.5 parts by mass, more preferably 8 parts by mass, and still more preferably 7 parts by mass. When the amount of addition of the carbon black is less than the lower limit, the electrical conductivity may be insufficient. Conversely, when the amount of addition of the carbon black is greater than the upper limit, the flexibility may be lacking, whereby, for example, the operational feeling of the touch panel may deteriorate.

The lower limit of a surface resistance of the electrically conductive portion 1a is $10^3 \Omega$, and more preferably $10^4 \Omega$. On the other hand, the upper limit of the surface resistance of the electrically conductive portion 1a is $10^8 \Omega$. When making the surface resistance of the electrically conductive portion 1a be less than the lower limit, it becomes necessary to increase the amount of addition of the carbon black, and as a result, the flexibility may be lacking, whereby, for example, the operational feeling of the touch panel may deteriorate. Conversely, when the surface resistance of the electrically conductive portion 1a is greater than the upper limit, for example, responsiveness of the touch panel may deteriorate.

The lower limit of a volume resistance of the electrically conductive portion 1a is $10^3 \Omega$, and more preferably $10^4 \Omega$. On the other hand, the upper limit of the volume resistance of the electrically conductive portion 1a is preferably $10^8 \Omega$. When making the volume resistance of the electrically conductive portion 1a be less than the lower limit, it becomes necessary to increase the amount of addition of the carbon black, and as a result, the flexibility may be lacking, whereby, for example, the operational feeling of the touch panel may deteriorate. Conversely, when the volume resistance of the electrically conductive portion 1a is greater than the upper limit, it may be difficult to impart the superior explosion-resistant property.

The upper limit value of a modulus at 30% elongation of the electrically conductive portion 1a is preferably 25 N/cm, more preferably 18 N/cm, and still more preferably 13 N/cm. When the modulus is greater than the upper limit, the flexibility may be lacking, whereby, for example, the operational feeling of the touch panel may deteriorate. On the other hand, the lower limit value of the modulus is not particularly limited, and in light of maintaining the strength as a glove, is preferably 1 N/cm, and more preferably 2 N/cm. It is to be noted that the "modulus at 30% elongation" as referred to herein can be measured by the following procedure. A test piece of 1 cm $\times$ 6 cm is cut out from the finger portion(s) of the glove such that a long side matches a lengthwise direction, set in chucks having an interval of 40 mm therebetween, and strained at a strain rate of 500 mm/min, whereby a modulus value at 30% elongation is defined as the individual value of the modulus at 30% elongation of the test piece. This is performed on four test pieces, and the arithmetical mean thereof is defined as the modulus at 30% elongation.

The lower limit of an average thickness of the electrically conductive portion 1a is preferably 0.1 mm, and more preferably 0.15 mm. On the other hand, the upper limit of the average thickness of the electrically conductive portion 1a is preferably 1.0 mm, more preferably 0.8 mm, and still more preferably 0.6 mm. When the average thickness of the electrically conductive portion 1a is less than the lower limit, abrasion resistance of the electrically conductive portion 1a may deteriorate, and/or it may be difficult to secure electrical conductivity. Conversely, when the average thickness of the electrically conductive portion 1a is greater than the upper limit, the flexibility may be lacking, whereby, for example, the operational feeling of the touch panel may deteriorate. It is to be noted that the "average thickness" as referred to herein can be determined by cutting out a test piece in a lengthwise direction of the fingers from the central palm portion and observing a cross section of the test piece at a magnification 50 times, and taking the arithmetical average of thicknesses of 20 sites observed in intervals of 200 $\mu$m along a span with a width of 4 mm.

Method for Manufacturing Glove

Hereinafter, each step in the method for manufacturing the glove 1 is explained in detail.

First Dipping Step

In the first dipping step S1, the knitted glove main body 10 which was prepared is put on a hand mold, the hand mold is dipped in and withdrawn from the coagulation agent solution, and then a solvent of the coagulation agent solution is volatilized. As the knitted glove main body 10 to be prepared, a knitted glove main body knitted using the above-described yarn with a glove knitting machine having a gauge of no less than 13 and no greater than 26 may be exemplified.

As the coagulation agent solution, a well-known solution may be used such as a methanol solution or an aqueous solution containing a polyvalent metal salt and/or an organic acid. Of these, the polyvalent metal salt being contained is preferred. When the polyvalent metal salt is contained in the coagulation agent solution, inhibiting excessive penetration of the rubber latex for forming the coating film layer 20 into the knitted glove main body 10 is facilitated.

The polyvalent metal salt is exemplified by barium chloride, calcium chloride, magnesium chloride, zinc chloride, aluminum chloride, barium nitrate, calcium nitrate, zinc nitrate, barium acetate, calcium acetate, zinc acetate, calcium sulfate, magnesium sulfate, aluminum sulfate, and the like. These may be used alone or in a combination of two or more types.

The lower limit of a content of the polyvalent metal salt in the coagulation agent solution with respect to 100 parts by mass of the solvent is preferably 0.1 parts by mass, more preferably 0.3 parts by mass, and still more preferably 0.5 parts by mass. On the other hand, the upper limit of the content of the polyvalent metal salt is not particularly limited as long as it enables inhibiting peeling of the coating film layer 20 from the knitted glove main body 10, and with respect to 100 parts by mass of the solvent, the upper limit is preferably 5 parts by mass, and more preferably 4 parts by mass.

Furthermore, examples of the organic acid include acetic acid, citric acid, and the like. A content of the organic acid in the coagulation agent solution with respect to 100 parts by mass of the solvent is preferably no less than 5 parts by mass and no greater than 50 parts by mass. This organic acid may be used alone, but is preferably used in a mixture with the polyvalent metal salt. When the organic acid is used in a mixture with the polyvalent metal salt, the thickness of the coating film layer 20 decreasing can be inhibited. Furthermore, compared to the case of using each alone, control of a film formation capability of the coagulation agent solution is facilitated.

In light of penetration of the coagulation agent into the knitted glove main body 10, a temperature of the hand mold when dipping the hand mold in the coagulation agent solution is preferably no less than 40 °C and no greater than 70 °C.

A temperature to volatilize the solvent after the hand mold is dipped in and withdrawn from the coagulation agent solution is preferably no less than 25 °C and no greater than 70 °C, and the lower limit of a time period of volatilizing the solvent (volatilization time period) is preferably 10 sec. On the other hand, the upper limit of the volatilization time period is not particularly limited, and in light of productivity, is preferably 600 sec. Since penetration of the rubber latex in the following step can be controlled by thus volatilizing the solvent, peeling of the coating film layer 20 which was formed can be prevented, while also preventing the coating film layer 20 from penetrating to an interior of the knitted glove main body 10 and causing deterioration of a touch feel of a glove interior. In light of controlling the penetration of the rubber latex, the volatilization time period is preferably no less than 10 sec and no greater than 180 sec in the case of the solvent being methanol, and is preferably no less than 30 sec and no greater than 600 sec in the case of the solvent being water.

Second Dipping Step

In the second dipping step S2, the hand mold covered with the knitted glove main body 10 after the first dipping step S1 is dipped in and withdrawn from the rubber latex compound.

It is to be noted that in the case of the coating film layer 20 having the foamed structure, the rubber latex compound is preferably used upon foaming with a foaming apparatus.

Drying Step

In the drying step S3, moisture of a latex coating film formed by the dipping in the rubber latex compound is volatilized. This drying step S3 may be performed, for example, using a well-known oven.

A temperature of volatilizing the moisture is preferably no less than 50 °C and no greater than 100 °C. When the temperature is less than the lower limit, the latex coating film which is undried may sag, whereby the coating film layer 20 may not be uniform. Conversely, if the temperature is greater than the upper limit, there is a tendency for drying unevenness to result due to rapid drying, whereby the coating film 20 may not be uniform.

Upon the moisture contained in the coating film layer 20 reducing, a hardening step of hardening at a temperature of no less than 100 °C and no greater than 140 °C is preferably included. Furthermore, before the hardening step, an additive-removing step of washing with water to remove additives which have bled or bloomed from the coating film layer 20 may be incorporated into the drying step. The additive-removing step is preferable in light of discoloration of the knitted glove main body 10 and/or the coating film layer 20 being prevented by washing with water before the hardening step.

In light of efficiency of manufacturing, a time period of volatilizing the moisture in the drying step S3 is preferably no less than 10 min and no greater than 80 min, and a time period of hardening in the hardening step is preferably no less than 10 min and no greater than 80 min.

It is to be noted that the second dipping step S2 and the drying step S3 may each be performed multiple times. When these steps are performed multiple times, uniformity of the coating film layer 20 to be formed improves. In light of efficiency of manufacturing, the number of times to perform these steps is preferably no greater than 3.

Advantages

Since the method for manufacturing a glove employs the rubber latex compound of the one aspect of the present invention as the rubber latex compound, the conductive paths in which the carbon black links to itself and extends can be more easily secured, thereby enabling manufacturing of a glove which is superior in terms of the touch panel responsiveness and has superior flexibility.

Furthermore, the glove 1 obtained using the method for manufacturing a glove has the superior electrical conductivity in which the surface resistance of the electrically conductive portion 1a is no less than $10^3$ Ω and no greater than $10^8$ Ω, while the amount of addition of the carbon black in the electrically conductive portion 1a is no less than 0.6 parts by mass and no greater than 9.5 parts by mass. In other words, it is considered that in the glove 1, a large number of the conductive paths in which the carbon black links to itself and extends are secured. Thus, the glove 1 is superior in terms of the touch panel responsiveness and has superior flexibility.

Second Embodiment

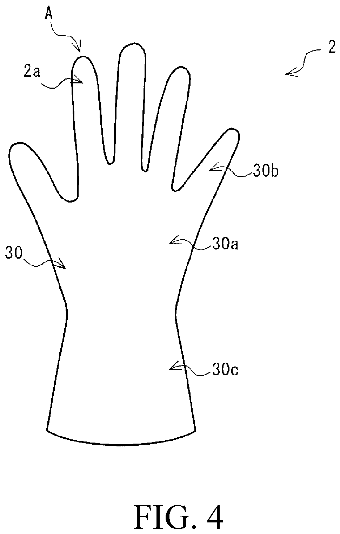

The method for manufacturing a glove shown in FIG. 1 also enables manufacturing a glove 2 shown in FIG. 4.

Glove

The glove 2 includes an electrically conductive portion 2a which is exposed on at least an outer face of a palm side of an index finger region A. Specifically, the glove 2 includes a coating film 30 constituting the electrically conductive portion 2a.

The coating film 30 includes: a main body portion 30a formed into a bag shape so as to cover a wear's hand main body; five finger portions 30b extending from the main body portion 30a so as to cover the wearer's first finger (thumb) to fifth finger (little finger), respectively; and a cylindrical cuff portion 30c extending from the main body portion 30a in a direction opposite to the finger portions 30b so as to cover the wearer's wrist.

The coating film 30, or in other words the electrically conductive portion 2a, contains rubber as a principal component, and carbon black.

As the principal component of the rubber, components similar to the rubber components of the rubber latex contained in the rubber latex compound of the one aspect of the present invention, described above, can be exemplified.

As the carbon black, carbon black similar to that contained in the rubber latex compound of the one aspect of the present invention, described above, can be exemplified.

The lower limit of an amount of addition of the carbon black in the electrically conductive portion 2a with respect to 100 parts by mass of the rubber is 0.6 parts by mass, more preferably 2 parts by mass, and still more preferably 3 parts by mass. On the other hand, the upper limit of the amount of addition of the carbon black is 9.5 parts by mass, more preferably 8 parts by mass, and still more preferably 7 parts by mass. When the amount of addition of the carbon black is less than the lower limit, the electrical conductivity may be insufficient. Conversely, when the amount of addition of the carbon black is greater than the upper limit, the flexibility may be lacking, whereby, for example, the operational feeling of the touch panel may deteriorate.

The lower limit of a surface resistance of the electrically conductive portion 2a is $10^3\,\Omega$, and more preferably $10^4\,\Omega$. On the other hand, the upper limit of the surface resistance of the electrically conductive portion 2a is $10^8\,\Omega$. When making the surface resistance of the electrically conductive portion 2a be less than the lower limit, it becomes necessary to increase the amount of addition of the carbon black, and as a result, the flexibility may be lacking, whereby, for example, the operational feeling of the touch panel may deteriorate. Conversely, when the surface resistance of the electrically conductive portion 2a is greater than the upper limit, for example, responsiveness of the touch panel may deteriorate.

The lower limit of a volume resistance of the electrically conductive portion 2a is preferably $10^3\,\Omega$, and more preferably $10^4\,\Omega$. On the other hand, the upper limit of the volume resistance of the electrically conductive portion 2a is preferably $10^8\,\Omega$. When making the volume resistance of the electrically conductive portion 2a be less than the lower limit, it becomes necessary to increase the amount of addition of the carbon black, and as a result, the flexibility may be lacking, whereby, for example, the operational feeling of the touch panel may deteriorate. Conversely, when the volume resistance of the electrically conductive portion 2a is greater than the upper limit, it may be difficult to impart a superior explosion-resistant property.

The upper limit value of a modulus of the electrically conductive portion 2a at 30% elongation is preferably 12 N/cm, more preferably 10 N/cm, and still more preferably 8 N/cm. When the modulus is greater than the upper limit, the flexibility may be lacking, whereby, for example, the operational feeling of the touch panel may deteriorate. On the other hand, the lower limit value of the modulus is not particularly limited, and in light of maintaining the strength as a glove, the lower limit value of the modulus is preferably 0.3 N/cm, and more preferably 0.5 N/cm.

The lower limit of an average thickness of the electrically conductive portion 2a is preferably 0.06 mm, and more preferably 0.08 mm. On the other hand, the upper limit of the average thickness of the electrically conductive portion 2a is preferably 0.4 mm, and more preferably 0.3 mm. When the average thickness of the electrically conductive portion 2a is less than the lower limit, strength of the electrically conductive portion 2a may be insufficient, and/or it may be difficult to secure electrical conductivity. Conversely, when the average thickness of the electrically conductive portion 2a is greater than the upper limit, the flexibility may be lacking, whereby, for example, the operational feeling of the touch panel may deteriorate.

Method for Manufacturing Glove

Hereinafter, each step in the method for manufacturing the glove 2 is explained in detail.

First Dipping Step

In the first dipping step S1, a hand mold is dipped directly in and withdrawn from a coagulation agent solution, and then a solvent of the coagulation agent solution is volatilized.

Except for a content of a polyvalent metal salt to be used being, with respect to 100 parts by mass of the solvent, no less than 5 parts by mass and no greater than 100 parts by mass, coagulation agent solutions similar to those used in the first dipping step S1 described in the first embodiment may be used as the coagulation agent solution. Furthermore, a temperature of the hand mold in dipping the hand mold in the coagulation agent solution, a temperature of volatilizing the solvent, and a time period of volatilizing the solvent may all be similar to those of the first dipping step S1 described in the first embodiment; thus, detailed explanations have been omitted.

Second Dipping Step

In the second dipping step S2, the hand mold after the first dipping step S1 is dipped in and withdrawn from the rubber latex compound.

In light of moldability, an average thickness of the latex coating film formed in one dipping is preferably no less than 0.05 mm and no greater than 0.6 mm. In other words, in a case of forming the coating film 30 to be thick, the coating film 30 is preferably formed by dipping the hand mold in the rubber latex compound multiple times. In the case of performing the dipping multiple times, to volatilize the moisture of the latex coating film between dipping, the second dipping step S2 and a drying step S3, described later, are preferably performed multiple times.

Drying Step

In the drying step S3, the moisture of the latex coating film formed by dipping the hand mold in the rubber latex compound is volatilized. The drying step S3 may be performed similarly to the drying step S3 described in the first embodiment.

Advantages

Due to adopting the method for manufacturing a glove, the glove 2 constituted from only the coating layer 30 can also be a glove being superior in terms of touch panel responsiveness, and also having superior flexibility.

An antislipping effect and/or a visual effect may be imparted to the glove by providing irregularities on the coating film layer of the glove of the first embodiment, the coating film of the glove of the second embodiment, and the like. A procedure of providing irregularities on the coating film layer or the coating film is exemplified by a procedure of providing desired irregularities on the hand mold and transferring a pattern of the irregularities.

EXAMPLES

Hereinafter, the present invention is explained in further detail by way of Examples and Comparative Examples.

Rubber Latex Compound

No. 1

As the rubber latex, "Lx550," an NBR latex available from Zeon Corporation, was prepared.

As the carbon black, "W311N," an aqueous dispersion containing electrically conductive carbon available from Lion Specialty Chemicals Co., Ltd. (electrically conductive carbon having a specific surface area of 800 $m^2$/g, a DBP absorption of 365 ml/100 g, a volatile content of 0.4% by mass, and a pH of 7) was prepared. With regard to the aqueous carbon black dispersion, dispersion was performed using a nonionic dispersant. An amount of addition of the nonionic dispersant with respect to 100 parts by mass of the carbon black was 102 parts by mass.

As the anionic surfactant, "Neopelex G-15" (sodium dodecyl benzene sulfonate (soft type)), available from Kao Corporation, was prepared. Furthermore, as the water-soluble polymer, "Poval PVA217," a polyvinyl alcohol available from Kuraray Co., Ltd. (degree of saponification of 88 mol%; partial to intermediate saponification) was prepared.

With respect to 100 parts by mass of the solid content of the NBR latex, 0.2 parts by mass of the anionic surfactant was added as a 16% by mass aqueous solution to the NBR latex, then 0.3 parts by mass of the water-soluble polymer was added as a 10% by mass aqueous solution, and a resulting mixture was stirred for 10 min. Next, the aqueous dispersion of the carbon black was added such that the solid content of the carbon black became 2.5 parts by mass (the nonionic dispersant being 2.6 parts by mass) with respect to 100 parts by mass of the solid content of the NBR latex and stirring was performed for 30 min, and then as the other additives, additives shown in Table 1 were added in amounts of addition (solid contents) shown in Table 1 to give rubber latex compound No. 1. It is to be noted that the solid content of the rubber latex compound was 43% by mass, and the remainder was water.

Table 1

| Additive | Amount of addition (parts by mass) |
|---|---|
| Colloidal sulfur | 1.0 |
| Zinc oxide | 2.0 |
| Vulcanization accelerating agent (zinc dibutyldithiocarbamate) | 0.2 |
| Antioxidant (2,2'-methylenebis(4-ethyl-6-tertbutylphenol)) | 1.0 |

No. 2 to No. 24

Rubber latex compounds No. 2 to No. 24 were obtained by a similar operation to that of No. 1, except that for each rubber latex compound, the type of the rubber latex, the amount of addition of the carton black, the type of the water-soluble polymer, and the other additives were as shown in Table 3.

It is to be noted that in Table 3, "LA-TZ," available from SUNWISE Co., Ltd, was used as the NR rubber latex. Furthermore, in the case of using the NR rubber latex, types and amounts of addition (solid contents) of the other additives were as shown in Table 2, and the solid content of the rubber latex compound was 54% by mass, and the remainder was water.

Table 2

| Additive | Amount of addition (parts by mass) |
|---|---|
| Potassium hydroxide | 0.4 |
| Colloidal sulfur | 1.0 |
| Zinc oxide | 2.0 |
| Vulcanization accelerating agent (zinc dibutyldithiocarbamate) | 0.2 |
| Antioxidant (2,2'-methylenebis(4-ethyl-6-tertbutylphenol)) | 1.0 |

Moreover, with regard to the type of the water-soluble polymer, "PVA217" indicates "Poval PVA217," used in No. 1. PVA117 and PVA424H are, respectively, "Poval PVA117" (degree of saponification of 98 mol%; complete saponification) and "Poval PVA424H" (degree of saponification of 80 mol%; partial saponification), being polyvinyl alcohols available from Kuraray Co., Ltd. 65SH50 and SM400 are, respectively, "METOLOSE 65SH50" (hydroxypropylmethyl cellulose) and "METOLOSE SM400" (methylcellulose), being types of methylcellulose available from Shin-Etsu Chemical Co., Ltd. Furthermore, "-" denotes that the water-soluble polymer was not added.

Evaluations

Rubber latex compounds No.1 to No. 24 were evaluated on the mechanical stability and the film formability.

Mechanical Stability

500 g of the rubber latex compound was stirred at 200 rpm at a constant temperature with a jacket of 23 °C using "BL600," an agitator with a turbine-type mixing blade, available from HEIDON. Thereafter, the time period until the rubber latex compound gelated was visually observed, and an evaluation was performed in accordance with the following evaluation criteria. The results are shown in Table 3.

Evaluation Criteria

A: Stable for no less than 7 days;

B: Aggregated on the 4th day;
C: Aggregated in 18 hrs; and
D: Aggregated in 2 hrs.

Film Formability

A glove having a film form was manufactured, and the film formability of the coating film was evaluated in accordance with the following evaluation criteria. The results are shown in Table 3.

Evaluation Criteria

A: Favorable, with no cracks recognized;
B: No problem in usage, with crack(s) being fine; and
C: crack(s) resulted

It is to be noted that the manufacturing of the glove differed between the case of the NBR rubber latex compound and the case of the NR rubber latex compound, and the procedures were as described below.

Manufacturing of Glove in Case of Using NBR Rubber Latex Compound (Gloves No. 1 to 10 and 18 to 21)

A ceramic hand mold with no surface coating, which had been heated in a 70 °C oven, was dipped in a coagulation agent (a 29% by mass methanol solution of calcium nitrate), and thereafter dried for 1 min in the 70 °C oven. Next, the hand mold was dipped in the NBR rubber latex compound, and then dried at 60 °C for 1 hr and vulcanized at 130 °C for 35 min. A film was removed from the hand mold while turning the film inside-out. Subsequently, leaching was carried out with 30 °C water for 45 min, and then drying was performed for 60 min in the 70 °C oven to give the intended glove in the film form.

Manufacturing of Glove in Case of Using NR Rubber Latex Compound (Gloves No. 11 to 17 and 22 to 24)

A ceramic hand mold without a surface coating was heated in a 70 °C oven, then was dipped in a coagulation agent (a 29% by mass methanol solution of calcium nitrate), and thereafter dried for 1 min in a 70 °C oven. Next, the hand mold was dipped in the NR rubber latex compound, and thereafter dried and vulcanized at 60 °C for 1 hr and then at 115 °C for 35 min. A film was removed from the hand mold. Subsequently, leaching was carried out with 30 °C water for 45 min, and then drying was performed for 60 min in a 70 °C oven to give the intended glove in the film form.

Table 3

| | Rubber latex | Per 100 parts by mass of rubber latex | | | | Per 100 parts by mass of carbon | | Mechanical stability | Film formability |
| | | carbon | nonionic dispersant | water-soluble polymer | | water-soluble polymer | dispersant + polymer | | |
| | Type | (parts by mass) | (parts by mass) | type | (parts by mass) | (parts by mass) | (parts by mass) | | |
| No. 1 | NBR | 2.5 | 2.6 | PVA217 | 0.3 | 12.0 | 114.5 | A | A |
| No. 2 | NBR | 4.0 | 4.1 | PVA217 | 0.5 | 12.5 | 115.0 | A | A |
| No. 3 | NBR | 4.0 | 4.1 | 65SH50 | 0.5 | 12.5 | 115.0 | A | A |
| No. 4 | NBR | 4.0 | 4.1 | PVA217 | 0.5 | 12.5 | 115.0 | A | A |
| No. 5 | NBR | 4.0 | 4.1 | PVA117 | 0.5 | 12.5 | 115.0 | A | A |
| No. 6 | NBR | 4.0 | 4.1 | PVA424H | 0.5 | 12.5 | 115.0 | A | A |
| No. 7 | NBR | 4.0 | 4.1 | 65SH50 | 0.5 | 12.5 | 115.0 | A | A |
| No. 8 | NBR | 4.0 | 4.1 | SM400 | 0.5 | 12.5 | 115.0 | A | A |

(continued)

| | Rubber latex | Per 100 parts by mass of rubber latex | | | | Per 100 parts by mass of carbon | | Mechanical stability | Film formability |
| | | carbon | nonionic dispersant | water-soluble polymer | | water-soluble polymer | dispersant + polymer | | |
| | Type | (parts by mass) | (parts by mass) | type | (parts by mass) | (parts by mass) | (parts by mass) | | |
| No. 9 | NBR | 8.0 | 8.2 | PVA217 | 1.0 | 12.5 | 115.0 | A | B |
| No. 10 | NBR | 8.0 | 8.2 | 65SH50 | 1.0 | 12.5 | 115.0 | A | B |
| No. 11 | NR | 4.0 | 4.1 | PVA217 | 0.5 | 12.5 | 115.0 | B | A |
| No. 12 | NR | 4.0 | 4.1 | 65SH50 | 0.5 | 12.5 | 115.0 | B | A |
| No. 13 | NR | 4.0 | 4.1 | PVA117 | 0.5 | 12.5 | 115.0 | B | A |
| No. 14 | NR | 4.0 | 4.1 | PVA424H | 0.5 | 12.5 | 115.0 | B | A |
| No. 15 | NR | 4.0 | 4.1 | SM400 | 0.5 | 12.5 | 115.0 | B | A |
| No. 16 | NR | 8.0 | 8.2 | PVA217 | 1.0 | 12.5 | 115.0 | B | B |
| No. 17 | NR | 8.0 | 8.2 | 65SH50 | 1.0 | 12.5 | 115.0 | B | B |
| No. 18 | NBR | 4.0 | 4.1 | - | 0.0 | 0.0 | 102.5 | D | - |
| No. 19 | NBR | 4.0 | 4.1 | PVA217 | 0.3 | 7.5 | 110.0 | C | - |
| No. 20 | NBR | 4.0 | 4.1 | 65SH50 | 0.3 | 7.5 | 110.0 | C | - |
| No. 21 | NBR | 4.0 | 4.1 | PVA217 | 4.0 | 100.0 | 202.5 | A | C |
| No. 22 | NR | 4.0 | 4.1 | - | 0.0 | 0.0 | 102.5 | D | - |
| No. 23 | NR | 4.0 | 4.1 | PVA217 | 0.3 | 7.5 | 110.0 | C | - |
| No. 24 | NR | 4.0 | 4.1 | 65SH50 | 0.3 | 7.5 | 110.0 | C | - |

From the results shown in Table 3, it can be understood that rubber latex compounds No. 1 to No. 17, in which the amount of addition of the water-soluble polymer with respect to 100 parts by mass of the carbon black is no less than 8 parts by mass and no greater than 50 parts by mass, and the total amount of addition of the nonionic dispersant and the water-soluble polymer with respect to 100 parts by mass of the carbon black is no less than 38 parts by mass and no greater than 200 parts by mass, are superior in terms of the mechanical stability and the film formability of a glove.

On the other hand, in the cases of rubber latex compounds No. 18 to No. 20 and No. 22 to No. 24, in which the amount of addition of the water-soluble polymer is less than 8 parts by mass, the mechanical stability is inferior; and in the case of rubber latex compound No. 21, in which the total amount of addition of the nonionic dispersant and the water-soluble polymer is greater than 200 parts by mass, the film formability is inferior.

In view of the above, it can be concluded that when the amount of addition of the water-soluble polymer with respect to 100 parts by mass of the carbon black is no less than 8 parts by mass and no greater than 50 parts by mass, and the total amount of addition of the nonionic dispersant and the water-soluble polymer with respect to 100 parts by mass of the carbon black is no less than 38 parts by mass and no greater than 200 parts by mass, a rubber latex compound being superior in terms of the mechanical stability and the film formability of a glove can be obtained.

Glove

Using the rubber latex compound shown in Table 4 (rubber latex compound No. 2 in Table 3), a glove No. 25 was manufactured having a knitted glove main body made of fibers, and a coating film layer constituting an electrically conductive portion. The procedure of manufacturing the glove is shown below.

Manufacturing of Glove No. 25

312 dtex woolly yarn (two 78 dtex-24 f two-fold yarns) was used as a core yarn, and a composite yarn in which 22 dtex-3 f carbon composite organic fibers ("9R1," available from KB Seiren, Ltd.) were coiled at 300 T/M was knitted into a knitted glove main body using "N-SFG 13G," manufactured by Shima Seiki Mfg., Ltd. The average thickness was 0.80 mm.

Using a thickening agent ("A-7075," available from Toagosei Chemical Industry Co., Ltd.), a viscosity of the NBR rubber latex compound shown in Table 4 was adjusted to 1,500 mPa·s (measured by B-type viscometer). Next, the knitted glove main body was placed on a metal hand mold, and then the hand mold, having been heated in a 70 °C oven, was dipped in a coagulation agent (a 1.0% by mass calcium nitrate-methanol solution), and drying was performed for 30 sec at room temperature. Subsequently, the hand mold was dipped in the NBR rubber latex compound, which was released after drying at 85 °C for 20 min, leaching was performed with 30 °C water for 45 min, and then vulcanization was performed at 130 °C for 35 min, whereby a resulting product was removed from the hand mold to give the intended glove. It is to be noted that the average thickness of the coating film layer was 0.35 mm.

Evaluations

Gloves No. 25 and No. 2 (a glove manufactured using rubber latex compound No. 2 as described in the section "Manufacturing of Glove in Case of Using NBR Rubber Latex Compound") were evaluated on the surface resistance, the volume resistance, the touch panel operability, and the modulus at 30% elongation.

Surface Resistance and Volume Resistance

Measurements of the surface resistance and the volume resistance were respectively performed in accordance with EN16350 and EN61340-2-3: 2016 8, being EN standards. Specifically, a test piece was cut out from a palm portion of the glove thus manufactured, connection was performed in accordance with the measurement procedures of the surface resistance and the volume resistance in the standards using concentric circle ring electrodes with "PRS-812," a resistance measurement apparatus available from Prostat Corporation, and a displayed resistance ($\Omega$) was read. The results are shown in Table 4.

Touch Panel Operability

The glove was put on a nylon cylindrical pole (cross sectional area of 16.3 mm$^2$), and whether the screen and main switch of an "iPhone 8," available from Apple Inc., were operated was evaluated in accordance with the following evaluation criteria. The results are shown in Table 4.

Evaluation Criteria

A: Operates with no stress;
B: Slight stress is felt; and
C: Does not operate at all, or it is difficult to touch the desired spot

Modulus at 30% Elongation

Four test pieces of 1 cm $\times$ 6 cm were cut out from the finger portions of the glove such that each long side matched the lengthwise direction, set in chucks having an interval of 40 mm therebetween, and strained at a strain rate of 500 mm/min, whereby modulus values at 30% elongation were measured, and the average value thereof was defined as the modulus at 30% elongation. The results are shown in Table 4.

Table 4

| | Rubber latex | Per 100 parts by mass of rubber latex | | | | Per 100 parts by mass of carbon | | Glove | | | | |
|---|---|---|---|---|---|---|---|---|---|---|---|---|
| | | carbon | nonionic dispersant | water-soluble polymer | | water-soluble polymer | dispersant + polymer | average film thickness | surface resistance | volume resistance | touch panel operability | 30% modulus |
| | type | (parts by mass) | (parts by mass) | type | (parts by mass) | (parts by mass) | (parts by mass) | (mm) | $(\Omega)$ | $(\Omega)$ | | (N/cm) |
| No.25 | NBR | 4.0 | 4.1 | PVA217 | 0.5 | 12.5 | 115.0 | 0.35 | $1.2 \times 10^4$ | $1.2 \times 10^4$ | A | 7.9 |
| No.2 | NBR | 4.0 | 4.1 | PVA217 | 0.5 | 12.5 | 115.0 | 0.22 | $1.1 \times 10^4$ | $7.5 \times 10^5$ | A | 7.5 |

Based on the results of Table 4, both forms of the glove are superior in terms of the touch panel operability. Furthermore, the modulus at 30% elongation is no greater than 8 N/cm, indicating superior flexibility. In view of the above, it can be concluded that using the rubber latex compound of the present invention enables obtaining a glove which is superior in terms of touch panel responsiveness and has superior flexibility, regardless of the form of the glove.

INDUSTRIAL APPLICABILITY

As described above, the rubber latex compound of the one aspect of the present invention enables manufacturing of a glove which is superior in terms of touch panel responsiveness and has superior flexibility. Furthermore, the glove manufactured using this rubber latex compound and the glove of the still another aspect of the present invention are superior in terms of the touch panel responsiveness, and have superior flexibility.

Explanation of the Reference Symbols

1, 2 Glove
1a, 2a Electrically conductive portion
10 Knitted glove main body
10a Main body portion
10b Finger portion
10c Cuff portion
20 Coating film layer
30 Coating film
30a Main body portion
30b Finger portions
30c Cuff portion
A Index finger region

**Claims**

1. A rubber latex compound for a glove comprising a rubber latex as a principal component,
   wherein

   carbon black, an anionic surfactant, a nonionic dispersant, and a water-soluble polymer are contained in the rubber latex compound,
   a DBP oil absorption of the carbon black is no less than 250 ml/100 g and no greater than 600 ml/100 g, and a volatile content of the carbon black is no less than 0.3% by mass and less than 1.0% by mass,
   an amount of addition of the water-soluble polymer with respect to 100 parts by mass of the carbon black is no less than 8 parts by mass and no greater than 50 parts by mass, and
   a total amount of addition of the nonionic dispersant and the water-soluble polymer with respect to 100 parts by mass of the carbon black is no less than 38 parts by mass and no greater than 200 parts by mass.

2. The rubber latex compound according to claim 1, wherein an amount of addition of the carbon black with respect to 100 parts by mass of a solid content of the rubber latex is no less than 0.6 parts by mass and no greater than 9.5 parts by mass.

3. The rubber latex compound according to claim 1, wherein the amount of addition of the anionic surfactant with respect to 100 parts by mass of the solid content of the rubber latex is no less than 0.05 parts by mass and no greater than 1.0 parts by mass.

4. The rubber latex compound according to claim 1, wherein a mass ratio of the nonionic dispersant to the anionic surfactant is no less than 0.2 and no greater than 285.

5. The rubber latex compound according to claim 1, wherein a total mass ratio of the nonionic dispersant and the water-soluble polymer to the anionic surfactant is no less than 0.5 and no greater than 300.

**6.** A method for manufacturing a glove, the method comprising:

first dipping of dipping a hand mold in a coagulation agent solution;
second dipping of dipping the hand mold in a rubber latex compound after the first dipping; and
drying the hand mold after the second dipping, wherein
the rubber latex compound is the rubber latex compound according to claim 1.

**Patentansprüche**

**1.** Kautschukmilchmasse für einen Handschuh, umfassend eine Kautschukmilch als Hauptkomponente, wobei

Ruß, ein anionisches Tensid, ein nichtionisches Dispergiermittel und ein wasserlösliches Polymer in der Kautschukmilchmasse enthalten sind,
die DBP-Ölabsorption des Rußes nicht weniger als 250 ml/100 g und nicht mehr als 600 ml/100 g beträgt und der Gehalt des Rußes an flüchtigen Bestandteilen nicht weniger als 0,3 Massen-% und weniger als 1,0 Massen-% beträgt,
die Zugabemenge des wasserlöslichen Polymers in Bezug auf 100 Massenteile des Rußes nicht weniger als 8 Massenteile und nicht mehr als 50 Massenteile beträgt und
die Gesamtzugabemenge des nichtionischen Dispergiermittels und des wasserlöslichen Polymers in Bezug auf 100 Massenteile des Rußes nicht weniger als 38 Massenteile und nicht mehr als 200 Massenteile beträgt.

**2.** Kautschukmilchmasse gemäß Anspruch 1, wobei die Zugabemenge des Rußes in Bezug auf 100 Massenteile des Feststoffgehalts der Kautschukmilch nicht weniger als 0.6 Massenteile und nicht mehr als 9.5 Massenteile beträgt.

**3.** Kautschukmilchmasse gemäß Anspruch 1, wobei die Zugabemenge des anionischen Tensids in Bezug auf 100 Massenteile des Feststoffgehalts der Kautschukmilch nicht weniger als 0,05 Massenteile und nicht mehr als 1,0 Massenteile beträgt.

**4.** Kautschukmilchmasse gemäß Anspruch 1, wobei das Massenverhältnis des nichtionischen Dispergiermittels zu dem anionischen Tensid nicht weniger als 0,2 und nicht mehr als 285 beträgt.

**5.** Kautschukmilchmasse gemäß Anspruch 1, wobei das Gesamtmassenverhältnis des nichtionischen Dispergiermittels und des wasserlöslichen Polymers zu dem anionischen Tensid nicht weniger als 0,5 und nicht mehr als 300 beträgt.

**6.** Kerfahren zur Herstellung eines Handschuhs, wobei das Verfahren umfasst:

ein erstes Eintauchen des Eintauchens einer Handform in eine Koagulationsmittellösung;
ein zweites Eintauchen des Eintauchens der Handform in eine Kautschukmilchmasse nach dem ersten Eintauchen; und
Trocknen der Handform nach dem zweiten Eintauchen, wobei
es sich bei der Kautschukmilchmasse um die Kautschukmilchmasse gemäß Anspruch 1 handelt.

**Revendications**

**1.** Composé de latex de caoutchouc pour un gant, comprenant un latex de caoutchouc comme composant principal, dans lequel

du noir de carbone, un tensioactif anionique, un dispersant non ionique, et un polymère soluble dans l'eau sont contenus dans ledit composé de latex de caoutchouc,
une absorption d'huile DBP dudit noir de carbone est au moins 250 ml/100 g et au plus 600 ml/100 g, et une teneur en constituants volatils du noir de carbone est au moins 0,3 % en masse et moins de 1,0 % en masse,
la quantité ajoutée dudit polymère soluble dans l'eau par rapport à 100 parties en masse dudit noir de carbone est au moins 8 parties en masse et au plus 50 parties en masse, et
la quantité ajoutée dudit dispersant non ionique et dudit polymère soluble dans l'eau par rapport à 100 parties en masse dudit noir de carbone est au moins 38 parties en masse et au plus 200 parties en masse.

2. Composé de latex de caoutchouc selon la revendication 1, dans lequel la quantité ajoutée dudit noir de carbone par rapport à 100 parties en masse de la teneur en matières solides dudit latex de caoutchouc est au moins 0,6 parties en masse et au plus 9,5 parties en masse.

3. Composé de latex de caoutchouc selon la revendication 1, dans lequel la quantité ajoutée dudit tensioactif anionique par rapport à 100 parties en masse de la teneur en matières solides dudit latex de caoutchouc est au moins 0,05 parties en masse et au plus 1,0 parties en masse.

4. Composé de latex de caoutchouc selon la revendication 1, dans lequel le rapport massique dudit dispersant non ionique audit tensioactif anionique est au moins 0,2 et au plus 285.

5. Composé de latex de caoutchouc selon la revendication 1, dans lequel le rapport massique total dudit dispersant non ionique et dudit polymère soluble dans l'eau audit tensioactif anionique est au moins 0,5 et au plus 300.

6. Procédé pour fabriquer un gant, ledit procédé comprenant :

un premier plongement de l'immersion d'une moule en forme de main dans une solution d'agent de coagulation,
un deuxième plongement de l'immersion d'une moule en forme de main dans un composé de latex de caoutchouc après le premier plongement, et
sécher la moule en forme de main après le deuxième plongement, dans lequel
ledit composé de latex de caoutchouc est le composé de latex de caoutchouc selon la revendication 1.

```
        ┌─────────┐
        │  START  │
        └─────────┘
             │
             ▼
    ┌───────────────────────┐
S1  │  First Dipping Step   │
    └───────────────────────┘
             │
             ▼
    ┌───────────────────────┐
S2  │  Second Dipping Step  │
    └───────────────────────┘
             │
             ▼
    ┌───────────────────────┐
S3  │     Drying Step       │
    └───────────────────────┘
             │
             ▼
        ┌─────────┐
        │  E N D  │
        └─────────┘
```

# FIG. 1

FIG.2

10b 10b 10b

10b

1

10b

20

10

10a

10c

FIG. 3

FIG. 4

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2003321581 A